(19) Europäisches Patentamt
European Patent Office
Office européen des brevets

(11) Veröffentlichungsnummer : **0 325 594 B1**

(12) **EUROPÄISCHE PATENTSCHRIFT**

(45) Veröffentlichungstag der Patentschrift :
05.06.91 Patentblatt 91/23

(51) Int. Cl.⁵ : **B60T 8/32**

(21) Anmeldenummer : 87905948.3

(22) Anmeldetag : 26.08.87

(86) Internationale Anmeldenummer :
PCT/EP87/00485

(87) Internationale Veröffentlichungsnummer :
WO 88/02709 21.04.88 Gazette 88/09

(54) ANTIBLOCKIERREGELSYSTEM.

(30) Priorität : 08.10.86 DE 3634241

(43) Veröffentlichungstag der Anmeldung :
02.08.89 Patentblatt 89/31

(45) Bekanntmachung des Hinweises auf die
Patenterteilung :
05.06.91 Patentblatt 91/23

(84) Benannte Vertragsstaaten :
AT DE FR GB

(56) Entgegenhaltungen :
EP-A- 177 817
DE-A- 2 307 368
DE-A- 2 460 904

(73) Patentinhaber : ROBERT BOSCH GMBH
Postfach 50
W-7000 Stuttgart 1 (DE)

(72) Erfinder : DOMINKE, Peter
Rechentshofenerstrasse 9
W-7120 Bietigheim-Metterz. (DE)

(74) Vertreter : Kammer, Arno, Dipl.-Ing.
ROBERT BOSCH GmbH Zentralabteilung
Patente Postfach 50
W-7000 Stuttgart 1 (DE)

EP 0 325 594 B1

## Beschreibung

### Stand der Technik

Ein Antiblockierregelsystem mit den Merkmalen des Oberbegriffs des Anspruches 1 ist aus der DE-A-23 07 368 bekannt. Dort ist ein Zeitglied vorgesehen, dem das den Druckabbau bewirkende Verzögerungssignal zugeführt wird. Ist dieses Verzögerungssignal länger als die Zeitkonstante des Zeitgliedes, so wird in der Zeitbemessung für den ersten Druckaufbauimpuls ein Zeitglied mit großer Zeitkonstante wirksam gemacht, das dann die Länge des Druckaufbaus bestimmt. War der Druckabbau kürzer als die zuerst genannte Zeitkonstante, dann ist ein Zeitglied mit kürzerer Zeitkonstante für die Bemessung des Druckaufbauimpulses bestimmend. Die Länge des Druckaufbauimpulses wird hier somit von der Länge des vorhergehenden Druckabbaus abhängig gemacht.

Aus der DE-A-24 60 904 ist es außerdem bekannt, die Bemessung des ersten Druckaufbauimpulses, der einen Druckaufbau mit großem Gradienten bewirkt, anstatt von dem vorhergehenden Druckabau von der Dauer der Druckanhebung in dem vorhergehenden Regelzyklus abhängig zu machen. Wird der Druckaufbau z.B. mit dem kleinen Gradienten durch mehrere Impulse bewirkt, so wird die Summe der benötigten Impulse festgestellt und diese Summe in die Bemessung der Zeitdauer des ersten Druckaufbaus im nachfolgenden Regelzyklus berücksichtigt.

### Vorteile der Erfindung

Durch die erfindungsgemäße Bemessung der Zeitdauer des ersten Druckaufbauimpulses (= Zeit des Druckaufbaus mit großem Gradienten) wird es möglich, die unterschiedlichen Druckkennlinien für Druckaufbau und Druckabbau besser zu berücksichtigen und damit eine optimalere Bemessung der Zeitdauer für den Druckaufbau zu finden, die den Bremsdruck sofort in die Nähe des Blokkierdrucks bringt.

### Figurenbeschreibung

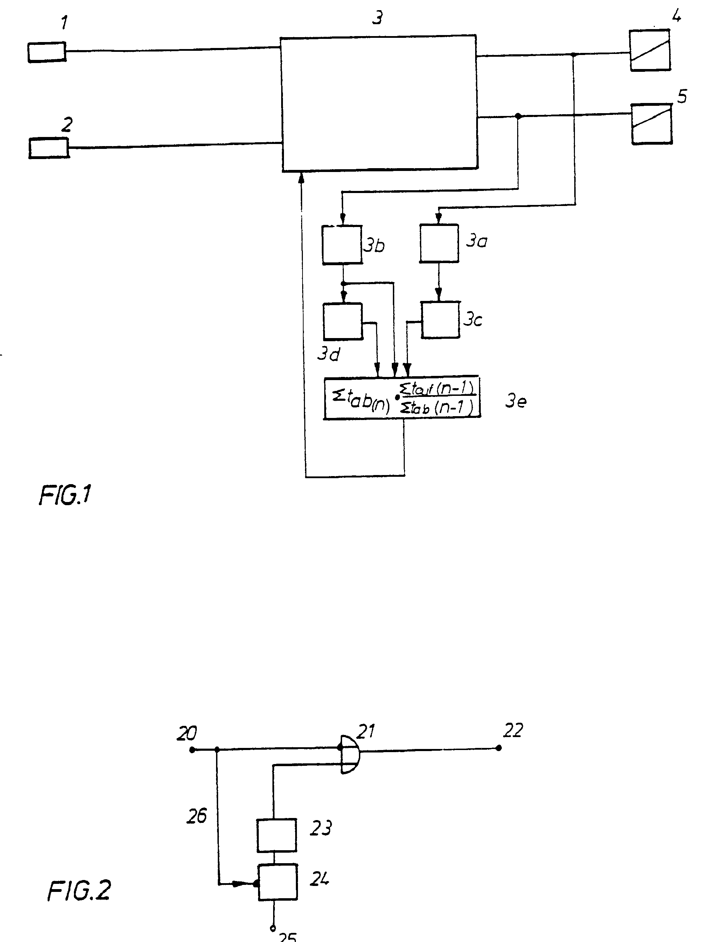

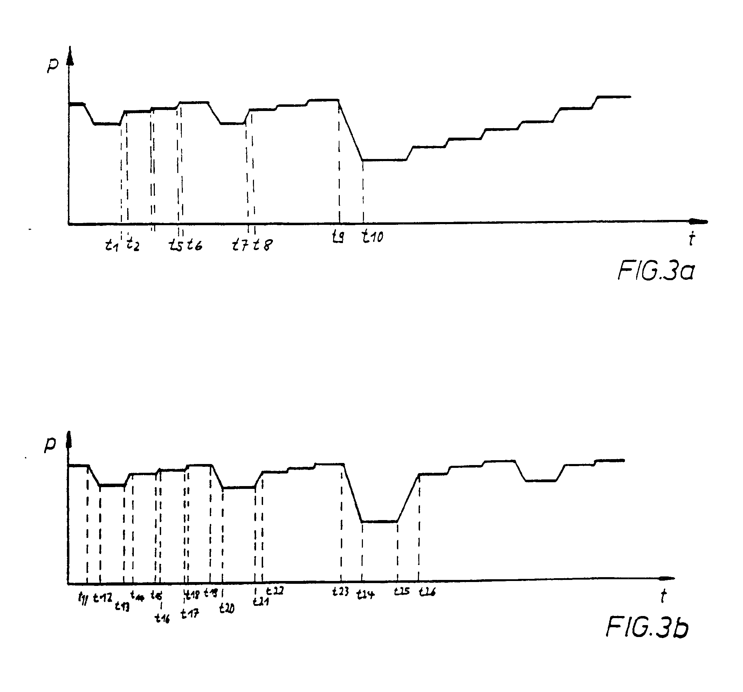

Anhand eines Ausführungsbeispiels dei Erfindung wird die Erfindung näher erläutert. Es zeigen Fig. 1 ein Blockschaltbild, Fig.2 eine mögliche Detailschaltung dazu und Fig. 3 Diagramm zur Erläuterung. In Fig. 1 sind mit 1 und 2 zwei Meßwertgeber bezeichnet, die zwei Rädern des Fahrzeugs zugeordnet sind und der Raddrehzahl entsprechende Signale an eine Auswerteschaltung 3 geben. Diese erzeugt daraus Bremsdrucksteuersignale zur Ansteuerung eines Einlaß- und eines Auslaßventils 4 bzw. 5. Die entsprechenden Ventile für das andere Rad sind der Einfachheit halber hier nicht dargestellt.

Mit zur Auswerteschaltung 3 gehören hier zwei Integratoren 3a und 3b, zwei Speicher 3c und 3d und eine Rechenschaltung 3e. Die entsprechenden Glieder für die zweite nicht-gezeigte Ventilkombination sind hier ebenfalls nicht dargestellt. Der mit der Ansteuerleitung für das Einlaßventil 4 verbundene Integrator 3a bestimmt während der Druckaufbauphase die Summe der Druckaufbauzeiten in einem Zyklus, und speichert eine entsprechende Größe in den Speicher 3c. Entsprechend bestimmt der Integrator 3b (mit der Auslaßventilansteuerleitung verbunden) die Summe der Druckabbauzeiten in einem Regelzyklus und speichert diese Größe im Speicher 3d ab. Oer Rechenschaltung 3e wird das vom Integrator 3b ermittelte Ergebnis $\Sigma t_{ab}$ (n) auch direkt zugeführt. Zusammen mit den abgerufenen, in den Speichern 3c und 3d abgespeicherten Ergebnissen $\Sigma t_{auf}$ (n + 1) bzw. $\Sigma t_{ab}$ (n − 1) des Vorzyklus wird daraus in der Rechenschaltung 3e ein Signal S erzeugt, das der folgenden Bezeichnung entspricht.

$$S = \Sigma t_{ab}\ (n) \cdot \frac{\Sigma t_{auf}\ (n-1)}{\Sigma t_{ab}\ (n-1)}$$

Dieses Signal S wird dem Auswerteschaltungsteil 3 zur Bemessung der Zeitspanne für den Druckaufbau mit großem Gradienten zugeführt. Diese Bemessung kann z.B. gemäß Fig. 2 erfolgen :

An einer Klemme 20 wird ein Beschleunigungssignal + b zugeführt, das über ein Oder-Gatter 21 zu einer Klemme 22 gelangt, an die das Einlaßventil 4 angeschaltet ist. Das + b-Signal bewirkt eine Konstanthaltung des Bremsdrucks bis die Radbeschleunigung einen vorgegebenen Wert unterschreitet. Das Ausgangssignal S der Rechenschaltung 3e liegt an der Klemme 25 an. Dieses Signal S bestimmt die Zeitkonstante eines monostabilen Glieds 24. Die Rückflanke des + b-Signals setzt das monostabile Glied 24. Dieses gibt nun während der Dauer seiner durch das Signal S bestimmten Zeitkonstanten ein Signal ab, das jedoch ohne Wirkung ist, (d.h. das Einlaßventil wird nicht angesteuert) und läßt damit Druckaufbau zu. Am Ende der Zeitkonstanten des monostabilen Glieds 24 wird durch die Rückflanke dessen Ausgangssignals ein Impulsgenerator 23 eingeschaltet, der nun dem Einlaßventil Impulse mit vorgegebenem Impulspauseverhältnis zuführt und damit einen Druckaufbau mit geringerem Gradienten bewirkt.

Das Ausführungsbeispiel kann auch mit einem µC-Steuergerät verwirklicht werden. In Fig. 3a ist ein gemäß dem Stand der Technik (OS 24 60 904) erzielbarer Druckverlauf dargestellt. Es ist dabei unterstellt, daß der Druckaufbau z.B. bei $t_7$ bis $t_8$ gemäß dem Stand der Technik der Summe der Zeiten des Druckaufbaus im Vorzyklus entspricht, also $(t_2 − t_1) + (t_4 −$

$t_3$) + ($t_6$ – $t_5$) enspricht. Kommt es nun wegen eines kunzeitigen $\mu$-Sprungs im Bereich $t_9$ bis $t_{10}$ zu einem langen Druckabbau, wie in diesem Bereich gezeigt, so folgt ein langdauernder (und langsamer) Druckaufbau bis der Blockierdruck wieder erreicht wird.

In Fig. 3b ist derselbe Fall für die erfindungsgemäße Ausbildung dargestellt. Hier wird z.B. zur Bestimmung der Zeitdauer ($t_{22}$ – $t_{21}$) die Druckabbauzeit ($t_{20}$ – $t_{19}$) gemessen und die Druckabbauzeit ($t_{12}$ – $t_{11}$) und die Summe der Druckaufbauzeiten ($t_{14}$ – $t_{13}$) + ($t_{16}$ – $t_{15}$) + ($t_{18}$ – $t_{17}$) wurden ebenfalls gemessen und sind gespeichert. Durch Berücksichtigung der direkt vorhergehenden Druckabbauzeit ($t_{24}$ – $t_{23}$) kommt es hier bei einem unterstellten kurzzeitigen $\mu$-Sprung im Bereich $t_{23}$ bis $t_{24}$ aber zu einem, großen Druckaufbau im Bereich $t_{25}$ bis $t_{26}$ und zu einem schnellen Erreichen des Blockierdrucks. Der erste Aufbauimpuls ($t_{13}$ bis $t_{14}$) wird z.B. durch Berücksichtigung eines Prozentsatzes der vorhergehenden Druckabbauzeit (z.B. 70%) gewonnen. Die Formel

$$s = \sum t_{ab}(n) \cdot \frac{\sum t_{auf}(n-1)}{\sum t_{ab}(n-1)}$$

gibt die Länge des Druckaufbaus an, der zur erneuten Instabilität (Blockierdruckniveau) führt.

Da man mit dem 1. Aufbaupuls die Instabilität noch nicht erreichen will, sondern erst mit dem 3. - 5. Puls, wird der erste Puls (großer Gradient) mit t = x · s angesteuert. Die nachfolgenden Pulse werden mit t = y · s angesteuert.

Zur Zeit ist x etwa 70% und y etwa 8%. Damit wird S nach dem 4. Aufbaupuls erreicht.

## Ansprüche

1. Antiblockierregelsystem für eine Fahrzeugbremsanlage mit
   a) wenigstens einem das Drehverhalten des Fahrzeugrads abtastenden Meßwertgeber (1, 2),
   b) einer elektrischen Auswerteschaltung (3), die die Meßwerte auswertet und Steuersignale für eine Bremsdruckteuereinrichtung (4, 5) erzeugt,
   c) einer Zeitsteuereinrichtung (3a-3e) in der Auswerteschaltung (3), die zu Beginn des Bremsdruckanstiegs nach einem vorhergehenden Druckabbau eine Erhöhung des Bremsdrucks für eine Zeitdauer mit einem großen Gradienten und danach mit einem geringeren Gradienten bewirkt, wobei die Zeitdauer von der Länge des direkt vorhergehenden Druckabbaus abhängig ist, dadurch gekennzeichnet, daß die Zeitdauer zusätzlich von dem Verhältnis der Druckaufbauzeit zu der Druckabbauzeit im vorhergehenden Regelzyklus abhängig ist.

2. Antiblockierregelsystem nach Anspruch 1, dadurch gekennzeichnet, daß im ersten Regelzyklus die Zeitdauer ein vorgegebener Prozentsatz der vorhergehenden Druckabbauzeit ist.

3. Antiblockierregelsystem nach Anspruch 1 oder 2, bei dem der Druckaufbau und/oder der Druckabbau gepulst erfolgt, dadurch gekennzeichnet, daß die Zeitdauer durch die Summe der Zeiten des direkt vorhergehenden Druckabbaus und dem Verhältnis der Summen der Druckaufbauzeiten und Druckabbauzeiten des vorhergehenden Regelzyklus abhängig ist.

## Claims

1. Antilocking control system for a vehicle brake system with
   a) at least one measured-value transmitter (1, 2) sampling the rotational behaviour of the vehicle wheel,
   b) an electric evaluation circuit (3) which evaluates the measured values and produces control signals for a brake-pressure control device (4, 5),
   c) a tire control device (3a-3e) in the evaluation circuit (3), which, at the beginning of the brake pressure rise after a preceding pressure reduction, brings about an increase of the brake pressure with a large gradient for a certain duration and then with a smaller gradient, the duration being dependent on the length of the immediately preceding pressure reduction, characterised in that the duration is additionally dependent on the ratio of the pressure build-up tire to the pressure reduction tire in the preceding control cycle.

2. Antilocking control system according to Claim 1, characterised in that the duration in the first control cycle is a predetermined percentage of the preceding pressure reduction tire.

3. Antilocking control system according to Claim 1 or 2, in which the pressure build-up and/or the pressure reduction is effected in pulsed fashion, characterised in that the duration is dependent by (sic) the sum of the tires of the immediately preceding pressure reduction and the ratio of the sums of the pressure build-up tires and pressure reduction times of the preceding control cycle.

## Revendications

1. Système de réglage anti-blocage pour une installation de freinage de véhicule avec :
   a) au moins un émetteur de valeur de mesure (1, 2) explorant le comportement en rotation de la roue du véhicule,
   b) un circuit électrique d'exploitation (3) qui exploite les valeurs de mesure et qui engendre des signaux de commande pour un dispositif (4, 5) de commande de la pression de freinage,

c) un dispositif de commande dans le temps (3a-3e) dans le circuit d'exploitation (3), qui au début de l'augmentation de la pression de freinage après une suppression précédente de la pression, provoque une élévation de la pression de freinage pour une certaine durée avec un grand gradient et ensuite avec un gradient plus réduit, cette durée dépendant de la durée de la suppression directement précédente de la pression, système de réglage anti-blocage caractérisé en ce que la durée dépend en outre, du rapport du temps d'établissement de la pression au temps de suppression de la pression dans le circuit de réglage précédent.

2. Système de réglage anti-blocage selon la revendication 1, caractérisé en ce que, dans le premier cycle de réglage, la durée est un pourcentage prédéfini de la durée précédente de suppression de la pression.

3. Système de réglage anti-blocage selon la revendication 1 ou la revendication 2, dans lequel l'établissement de la pression et/ou la suppression de la pression, s'effectue par impulsions, système caractérisé en ce que la durée dépend de la somme des temps de la suppression directement précédente de la pression et du rapport des sommes des temps d'établissement de la pression et des temps de suppression de la pression du cycle de réglage précédent.

$$\Sigma t_{ab(n)} \cdot \frac{\Sigma t_{auf}(n-1)}{\Sigma t_{ab}(n-1)}$$

FIG.1

FIG.2

FIG.3a

FIG.3b